# EUROPEAN PATENT APPLICATION

(11) **EP 4 328 090 A1**
(43) Date of publication of application: **28.02.2024**
(21) Application number: 23191328.6
(22) Date of filing: 14.08.2023
(51) Int. Cl.: B60R 1/12, B60R 1/08, G02F 1/157, B60R 1/02

(54) **AUTO DIMMING MIRROR**

(30) Priority: 22.08.2022 AU 2022902388
(71) Applicant: Seeing Machines Limited, Fyshwick, ACT 2609 (AU)
(72) Inventor: NOBLE, John, Fyshwick, 2609 (AU)
(74) Representative: Vossius & Partner Patentanwälte Rechtsanwälte mbB

(57) **Abstract**

Described herein is a rearview mirror (100) for a vehicle (102). The rearview mirror (100) comprises a body (104) mounted to the vehicle (102) and supporting an electrically controllable reflective device (108). A camera (110) is mounted to or adjacent to the body (104). The camera (110) comprises an image sensor having a pixel array adapted to capture two or three dimensional images of an interior of the vehicle (102), including a rear window (112), in both the visible and infrared wavelength range. A processor (124) is configured to process the captured images to generate a control signal for controlling a transmittance of the electrically controllable reflective device (108). The control signal is derived based on a comparison of pixel brightness between pixels within an interior vehicle cabin pixel region (150) and a rear window pixel region (152) in the captured images.

## Description

### FIELD OF THE INVENTION

The present application relates to dimmable mirrors and in particular to mirrors that dim in response to detected glare.

Embodiments of the present invention are particularly adapted for automatically dimmable rearview mirrors in vehicles. However, it will be appreciated that the invention is applicable in broader contexts and other applications.

### BACKGROUND

Rearview mirrors are used in most vehicles to allow a driver to view scenes behind a vehicle while remaining in a forward facing position. During periods of low light, such as at night, drivers can be temporarily visually impaired by bright lights in the scene being imaged by a rearview mirror. This can give rise to dangerous driving situations and lead to accidents.

To address this problem, mechanically dimmable mirrors were developed decades ago in which a mirror element is mechanically switched between a high reflectivity mode to a low reflectivity mode. However, this required the driver to divert their attention to the mirror in order to switch the mirror modes.

Automatically dimmable or "auto-dimming" mirrors represent a more advanced solution to mechanically dimmable mirrors as they operate without intervention of the driver. Auto-dimming mirrors include one or more light sensors positioned on the rearview mirror body to sense light conditions and, in response, control an electrochromic mirror element to adjust the reflectivity of the mirror.

US Patent 6,402,328 to Bechtel *et al.* entitled "*Automatic dimming mirror using semiconductor light sensor with integral charge collection*" relates to an auto-dimming mirror having a forward facing ambient light sensor and a rear facing glare sensor. Both sensors are simple light sensors and their output signals are used by a controller to determine an appropriate dimming level of a dimming element. Bechtel *et al.* requires two separate light sensors which adds to cost and provides two points of failure in the system.

Korean Patent Application Publication KR 20140054969 A entitled "*Camera apparatus in vehicle and method for taking image thereof*" relates to an auto-dimming vehicle mirror that uses two cameras to sense illuminance or glare in front of and behind a vehicle and, in response, control the reflectance in the mirror. The use of a two-camera system for performing auto-dimming is costly and complex, particularly in a competitive vehicle environment.

Any discussion of the background art throughout the specification should in no way be considered as an admission that such art is widely known or forms part of common general knowledge in the field.

### SUMMARY OF THE INVENTION

In accordance with one aspect of the present invention, there is provided a rearview mirror for a vehicle, the rearview mirror comprising:
a body mounted to the vehicle and supporting an electrically controllable reflective device;
a camera mounted to or adjacent to the body, the camera comprising an image sensor having a pixel array adapted to capture two or three dimensional images of an interior of the vehicle, including a rear window, in both the visible and infrared wavelength range;
a processor configured to process the captured images to generate a control signal for controlling a transmittance of the electrically controllable reflective device;
wherein the control signal is derived based on a comparison of pixel brightness between pixels within an interior vehicle cabin pixel region and a rear window pixel region in the captured images.

In some embodiments, the comparison of pixel brightness includes comparing one or more percentile values, or standard deviation of pixel brightness distribution of pixels within the interior vehicle cabin pixel region to one or more percentile values, or standard deviation of pixel brightness distribution of pixels within the rear window pixel region.

In some embodiments, the camera includes an auto exposure control function and wherein the control signal is derived at least in part from one or more auto exposure control settings.

In some embodiments, the camera is controlled to selectively vary one or more exposure settings between capture of different images.

In some embodiments, the vehicle cabin pixel region is defined based on object detection of one or more objects within the vehicle cabin.

In some embodiments, the rear window pixel region is defined as a cabin region located by object detection in the captured images.

In some embodiments, the electrically controllable reflective device includes an electrochromic device.

In some embodiments, the processor is housed within the body. In other embodiments, the processor is located external to the body.

In some embodiments, the camera includes an image sensor that is adapted to image in only one of the infrared and visible wavelength ranges. In one embodiment, the image sensor is adapted to image in the visible wavelength range. In another embodiment, the image sensor is adapted to image in the infrared wavelength range.

In some embodiments, the rearview mirror includes an ambient light sensor mounted to a front of the body. The ambient light sensor is configured to detect ambient light conditions in front of the vehicle and generate an ambient light signal. The processor may be responsive to the ambient light signal in addition to the control signal for controlling a transmittance of the electrically controllable reflective device.

In some embodiments, the camera is an occupant monitoring camera adapted to provide images to the processor to perform occupant monitoring within the interior of the vehicle.

In some embodiments, the camera is capable of imaging in both the visible and infrared wavelength regions.

In some embodiments, the processor is adapted to determine a pose of the camera from known objects within the captured images.

In some embodiments, the camera is configured such that the image sensor also images a side window of the vehicle.

In some embodiments, the processor is configured to determine a side window pixel region and to perform a comparison of pixel brightness between pixels corresponding to the side window pixel region and rear window pixel region. In some embodiments, the processor is configured to determine whether it is currently day or night based on a pixel brightness of the side window pixel region. In some embodiments, an exposure period and/or imaging mode of the camera is adjusted based on the determination of day or night by the processor.

### BRIEF DESCRIPTION OF THE FIGURES

Example embodiments of the disclosure will now be described, by way of example only, with reference to the accompanying drawings in which:
Figure 1 is a schematic front view of a rearview mirror according to an embodiment of the invention;
Figure 2 is a perspective view of the interior of a vehicle having the rearview mirror of Figure 1 installed therein;
Figure 3 is a driver's perspective view of the automobile of Figure 2 having the rearview mirror of Figure 1 installed therein;
Figure 4 a plan view of the vehicle of Figure 2 having the rearview mirror of Figure 1 installed therein;
Figure 5 is a perspective view of the cabin of the vehicle of Figure 2 as viewed from a camera of the rearview mirror of Figure 1;
Figure 6 is a schematic functional view of the main components of the rearview mirror of Figure 1;
Figure 7 is a schematic side view of an electrically controllable reflective element illustrating rays of incident and reflected light;
Figure 8 is a flow diagram illustrating the primary steps in a method of controlling the dimming of the rearview mirror of Figure 1;
Figure 9 is a flow diagram illustrating sub-steps of a first method for deriving a dimming control signal; and
Figure 10 is a flow diagram illustrating sub-steps of a second method for deriving a dimming control signal.

### DESCRIPTION OF THE INVENTION

Embodiments of the present invention will be described with reference to a conventional automobile and configured to leverage components of a driver or occupant monitoring system that is fitted to the automobile. However, it will be appreciated that the present invention may be implemented in other types of vehicle such as a train, tram, bus, truck or aircraft and may not leverage use of a driver or occupant monitoring system. Occupant monitoring may also be referred to as cabin monitoring as the system can monitor other features of a vehicle cabin besides simply occupants.

### Rearview mirror device

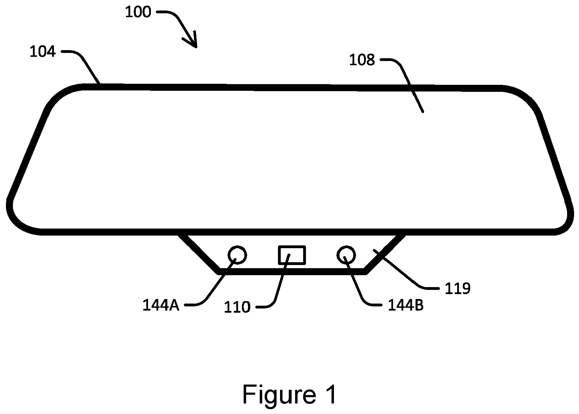

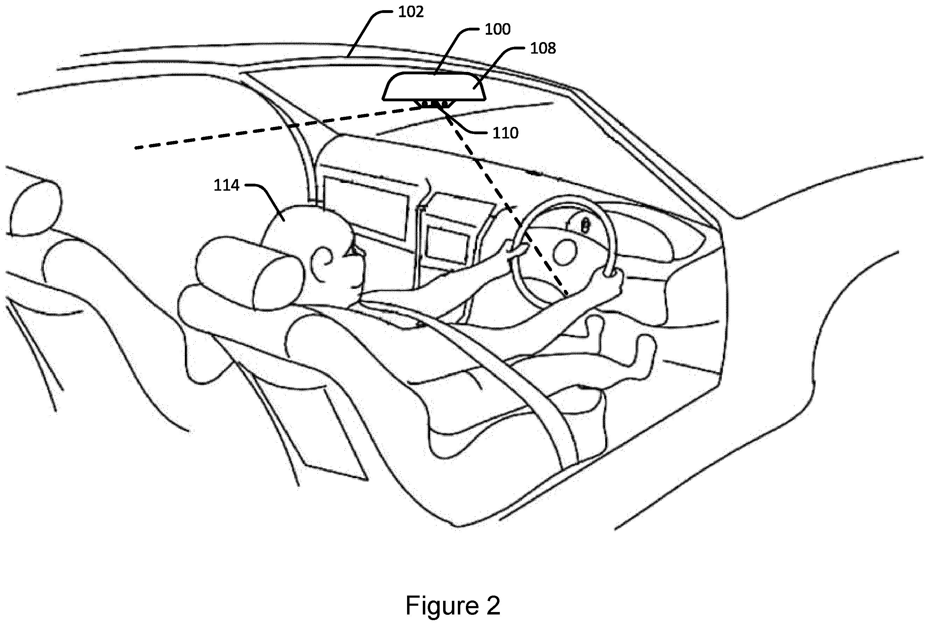

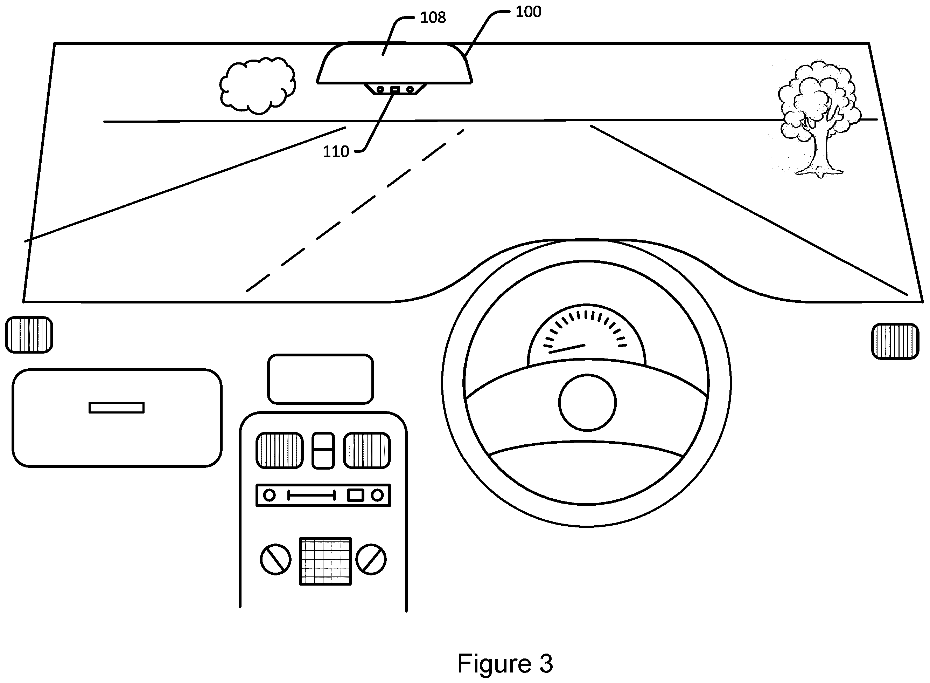

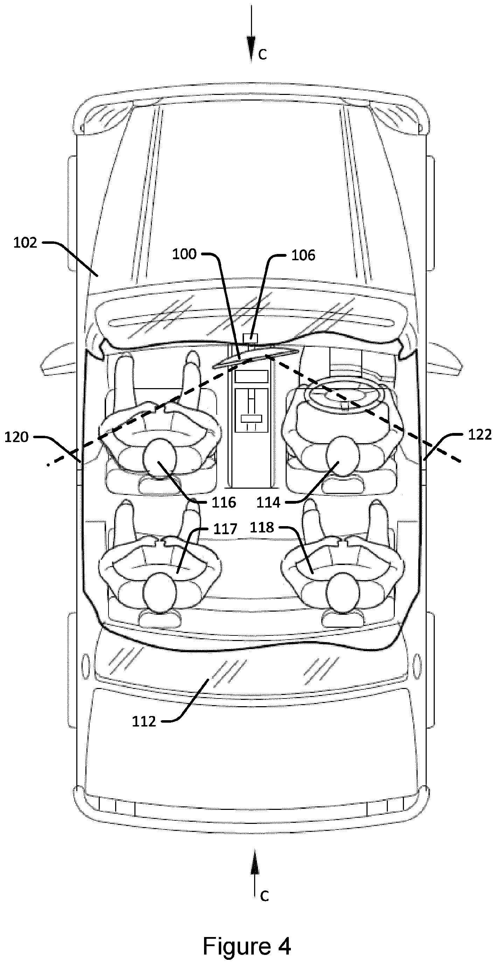

Referring to Figures 1 to 4, there is illustrated a rearview mirror 100 for use in a vehicle 102. As best shown in Figures 2 to 4, rearview mirror 100 is mounted in the conventional location within vehicle 102 at a central upper region of the front windshield. Mirror 100 includes a substantially horizontally elongate body 104 mounted to vehicle 102 at one or more mounting points 106, as shown in Figure 4. Mounting point 106 may be adapted to allow mirror 100 to be pivotally moveable. Body 104 preferably takes the form of a protective housing formed of a rigid material such as a plastics material. Body 104 supports an electrically controllable reflective device 108 that is adapted to selectively filter and reflect light incident onto mirror 100 in a manner described below.

A camera 110 is mounted to or adjacent to body 102 and comprises an image sensor oriented to capture two or three dimensional images of the interior of the vehicle (as indicated by the dashed lines in Figures 2 and 4). Camera 110 may be a conventional CCD or CMOS based digital camera having a two-dimensional array of photosensitive pixels and optionally the capability to determine range or depth (such as through one or more phase detect elements). The photosensitive pixels are preferably capable of sensing electromagnetic radiation in both the visible and infrared wavelength ranges. Camera 110 may also be a three dimensional camera such as a time-of-flight camera or other scanning or range-based camera capable of imaging a scene in three dimensions. In other embodiments, camera 110 may be replaced by a pair of like cameras operating in a stereo configuration and calibrated to extract depth. Although camera 110 is preferably configured to image in both the visible and infrared wavelength ranges, it will be appreciated that, in alternative embodiments, camera 110 may image in the infrared range and/or the visible wavelength ranges. To image in both the visible and infrared wavelength range, camera 110 may include a RGB-IR image sensor having pixels capable of sensing in the red, green, blue and IR wavelength regions. In some embodiments, camera 110 may include a wide-angled lens.

As shown in Figure 4, camera 110 is preferably oriented such that the image sensor captures a field of view including a rear window 112 of vehicle 102. However, as illustrated in Figures 2 and 4, in some embodiments, it is preferable for camera 110 to also image the broader vehicle cabin including a driver 114 (to perform driver monitoring), passengers 116, 117 and 118 (to perform occupant/cabin monitoring) and one or more side window 120 and 122.

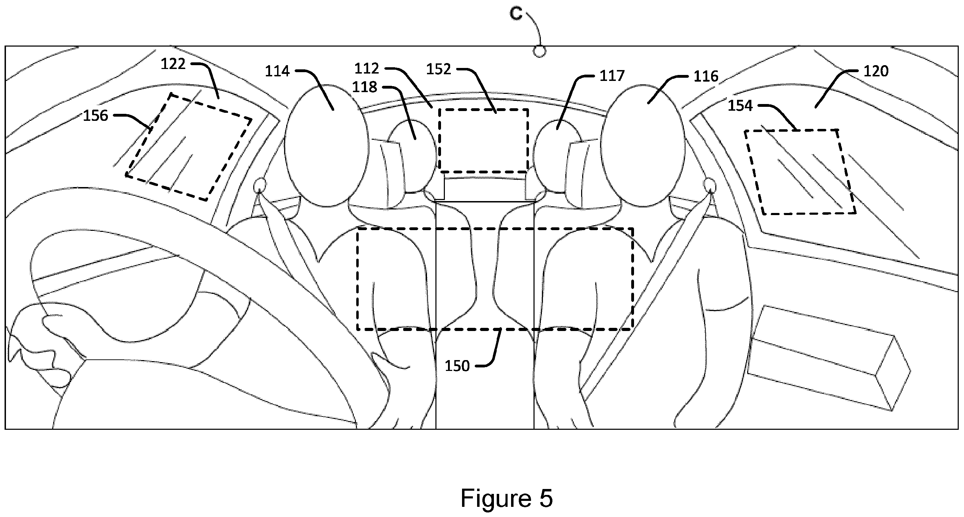

Figure 5 illustrates an exemplary perspective view of camera 110 viewing the interior of vehicle 102, including rear window 112, driver 114, passengers, 116, 117 and 118 and side windows 120 and 122. Axis C represents the longitudinal axis of vehicle 102 as shown in Figure 4.

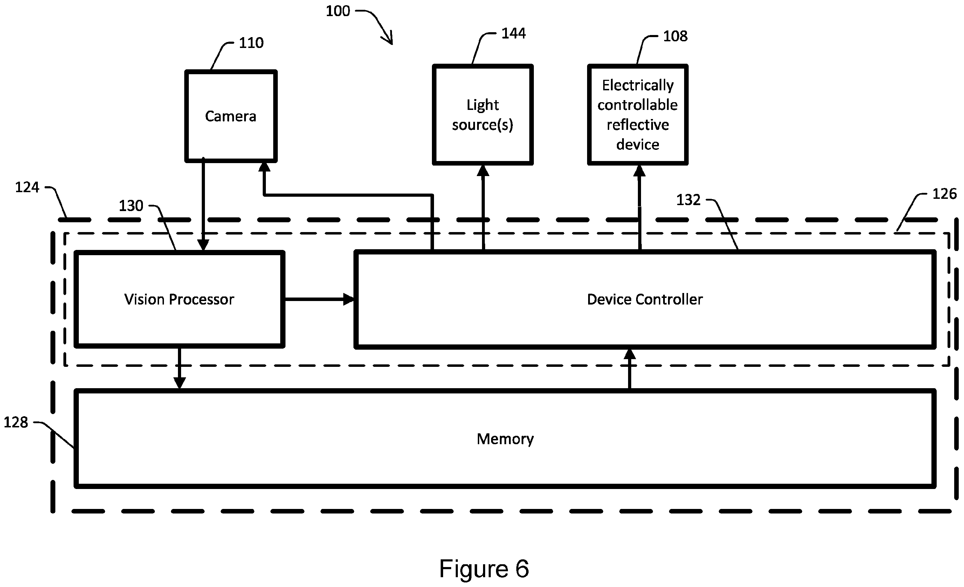

Referring now to Figure 6, there is illustrated a schematic system level view of mirror 100. A processor 124 is configured to process the captured images to generate a control signal for controlling a transmittance of electrically controllable reflective device 108. Processor 124 acts as the central processor for system 100 and is configured to perform a number of functions as described below.

Processor 124 is preferably contained within body 104. However, in other embodiments, processor 124 is located separate to body 104 and connected electrically or wirelessly to mirror 100 via a communications interface. In one embodiment, the operation of controller 124 is performed by an onboard vehicle computer system which is connected to camera 110 and light sources 144A and 144B.Processor 124 may be implemented as any form of computer processing device or portion of a device that processes electronic data, e.g., from registers and/or memory to transform that electronic data into other electronic data that, e.g., may be stored in registers and/or memory. As illustrated in Figure 6, processor 124 includes a microprocessor 126 (or multiple microprocessors, integrated circuits or chips operating in conjunction with each other), executing code stored in memory 128, such as random access memory (RAM), read-only memory (ROM), electrically erasable programmable read-only memory (EEPROM), and other equivalent memory or storage systems as should be readily apparent to those skilled in the art.

Microprocessor 126 of processor 124 functionally includes a vision processor 130 and a device controller 132. Vision processor 130 and device controller 132 represent functional elements which are both performed by microprocessor 114. However, it will be appreciated that, in alternative embodiments, vision processor 130 and device controller 132 may be realized as separate hardware such as microprocessors in conjunction with custom or specialized circuitry.

Vision processor 130 is configured to process the captured images to perform various image processing functions described below, such as region of interest detection, brightness comparisons, glare detection and driver/occupant monitoring routines. In general, the driver/occupant monitoring is performed based on infrared wavelength information received from the image sensor of camera 110 while brightness comparison and glare detection is performed based on visible wavelength information received from the image sensor of camera 110. Device controller 132 is configured to control camera 110 and to generate a control signal for controlling a transmittance of electrically controllable reflective device 108.

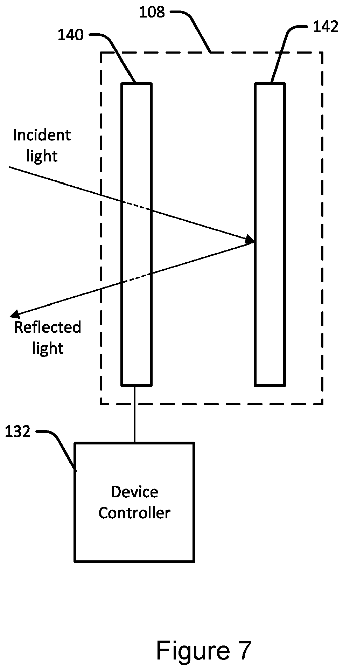

Referring now to Figure 7, the electrically controllable reflective device 108 may comprise more than one individual element. In the illustrated embodiment, the electrically controllable reflective device 108 comprises an electrically controllable electrochromic element 140 combined with a conventional reflective mirror element 142. Both elements 140 and 142 are fixedly mounted within housing 104 of mirror 100. Electrochromic elements vary their level of opaqueness in response to an applied voltage. In operation, light is incident onto the electrochromic element 140 and a portion of the incident light passes through it and is reflected by mirror element 142 before passing back through electrochromic element 140. The reflected light may be further partially blocked by electrochromic element 140 on the return pass, thereby doubling the dimming (or halving the transmittance) of the incident light. When placed in front of reflective mirror element 142, electrochromic element 140 provides a variably reflective device. The level of opaqueness of electrochromic element 140 is controlled by a voltage controlled dimming signal from device controller 132. The dimming control signal generated is dependent on a brightness measures of visible light from vision processor 130 in a manner described below.

Additional components of mirror 100 may also be included within the common housing of body 104 or may be provided as separate components according to other additional embodiments. Throughout this specification, specific functions performed by vision processor 130 or device controller 132 may be described more broadly as being performed by processor 124.

Finally, referring to Figures 1 and 6, mirror 100 optionally includes light sources 144A and 144B that are adapted to illuminate driver 114 and/or other occupants 116-118 with infrared radiation. Light sources 144A and 144B may comprise Vertical Cavity Surface Emitting Lasers (VCSEL), Light Emitting Diodes (LED) or other light sources. This illumination is timed to occur during predefined image capture periods when camera 110 is capturing an image, so as to enhance the driver's face to obtain high quality images of the driver's face or facial features. This illumination by light sources 144A and 144B is advantageous for driver and occupant monitoring systems.

As illustrated in Figure 1, camera 110 is preferably disposed on a lower flange 119 of mirror 100, together with light sources 144A and 144B. However, in other embodiments, camera 110 may be disposed at other locations on mirror 100 such as behind electrically controllable reflective device 108. In some embodiments, camera 110 may be located on a separate region of the vehicle cabin that is close to or adjacent to mirror 100. In these embodiments, it is preferable for camera 110 to be located as close to mirror 100 as possible so that the image sensor of camera 110 to capture visible light reflections that would result in glare to the driver 114.

### Dimming Control Overview

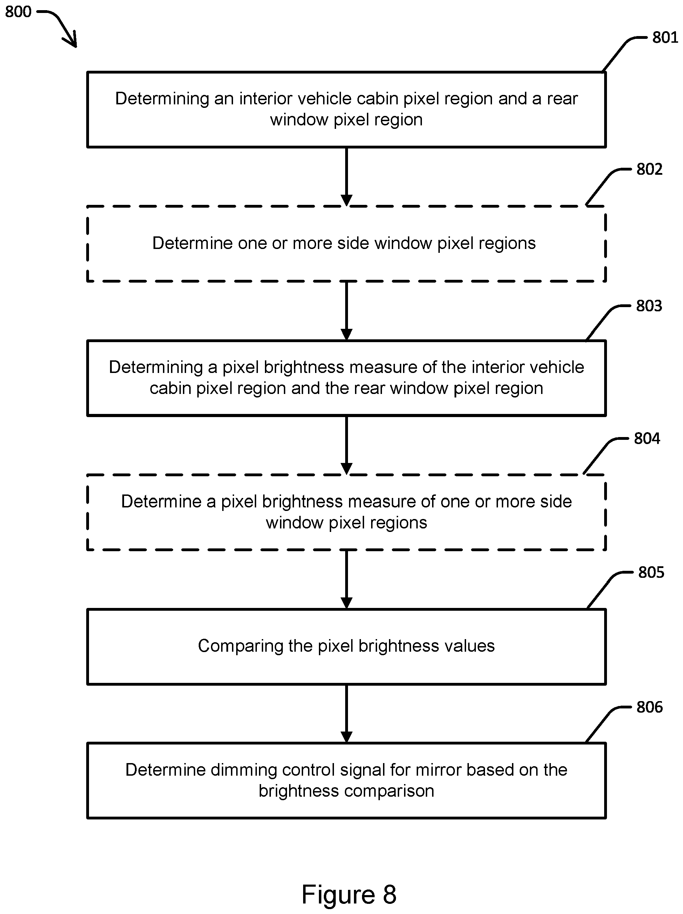

The operation of mirror 100 will now be described with reference to method 800 of Figure 8, in with conjunction Figures 1 to 7. Method 800 may be performed on every image in a captured sequence of images or a subset of images such as every 10, 50 or 100 image frames.

The brightness monitoring and dimming control described below is performed based on measure of light in the visible wavelength range by camera 110 as it is the visible light that contributes to glare. In this regard, mention of brightness measures and pixel brightness relate to intensity values of pixels that are sensitive to visible wavelengths. However, as mentioned below, it is advantageous for camera 110 to be able to image in both the visible and infrared wavelength ranges so that it can also operate as a driver/occupant/cabin monitoring system. It will be appreciated that some steps in the control process below, such as defining cabin pixel regions, may also involve imaging in the infrared wavelength range.

As shown in Figure 5, during ordinary operation of vehicle 102, camera 110 images a scene which includes an interior of vehicle 102, the driver 114, passengers 116-118, rear window 112 and side windows 120 and 122. At step 801 of method 800 (see Figure 8), vision processor 130 processes the images captured by camera 110 to determine an interior vehicle cabin pixel region 150 and a rear window pixel region 152. Step 801 may be performed by processing visible, infrared or both visible and infrared wavelength information captured by camera 110 to determine the position, size and shape of regions 150 and 152. The output is a designation of a certain subset of pixels of the image sensor for camera 110 as being within one of regions 150 and 152.

Pixel values for visible wavelengths within the interior vehicle cabin pixel region 150 provides a proxy for determining a current ambient level of brightness (or ambient light) within the vehicle cabin while pixel values for visible wavelengths within the rear window pixel region 152 provides a proxy for a level of brightness behind the vehicle. Pixel data corresponding to infrared wavelengths is not important for this brightness determination as these wavelengths are invisible to a driver and hence does not contribute to glare.

Although interior vehicle cabin pixel region 150 is illustrated as being a central region below the rear window in Figure 5, it will be appreciated that this region may be selected as any region within the vehicle cabin that is indicative of a level of brightness within the cabin. Further, the rear window pixel region 152 may comprise the entire rear window 110 or a subset of the rear window such as a central region where other vehicles are likely to be observed from camera 110. Regions 150 and 152 should be chosen so as not to overlap.

The vehicle cabin pixel region 150 and/or rear window pixel region 152 may be defined by vision processor 130 based on object or contour detection of one or more objects within the vehicle cabin and/or edge detection within the images. By way of example, vision processor may detect objects such as the vehicle frame (e.g. B-Pillars, C-Pillars, roof panel etc.), seats, headrests and passengers. In other embodiments, vision processor 130 may execute or access one or more machine learned classifiers that are able to classify regions 150 and 152 from a training set of images with or without supervised learning from a human. In either case, vision processor 130 is able to dynamically determine regions 150 and 152 in the captured images, even where the scene changes (e.g. new passengers or mirror 100 being reoriented).

In other embodiments, various regions of a vehicle cabin may be defined in a three dimensional vehicle model corresponding to the particular model of vehicle in which mirror 100 is installed. The regions are preferably defined in three dimensional coordinates of a vehicle frame of reference. Example regions identified in vehicle model include a volume surrounding each seat and a volume for the rear window.

In some embodiments, processor 124 is adapted to determine a pose of camera 110 from known objects within the captured images such as vehicle objects. If the precise camera pose can be determined relative to a vehicle frame of reference, then regions 150 and 152 can be derived more easily. By way of example, mirror 100 may be configured to perform a method as described in US Patent 10,909, 721 to Noble et al*.* and entitled "*Systems and methods for identifying pose of cameras in a scene*". The contents of US Patent 10,909, 721 are herein incorporated by way of cross-reference. This method compares the current view of the cabin to a reference image, identifies features of the cabin, and uses the relative feature positions to determine the pose (position and rotation) of the camera relative to the vehicle.

Using the determined camera pose, the three dimensional volumes from the three dimensional coordinates are projected into the image as two dimensional regions in pixel coordinates. The two dimensional rear window pixel region 152 defines the region where rear brightness in the visible range should be measured.

The resulting determined pixel regions 150 and 152 include a respective subset of all pixels of the image sensor of camera 110 and these subsets of pixels are used for subsequent brightness analysis in the visible range.

Step 801 may be performed at predetermined intervals of time and/or after certain actions such as when the car starts or when the mirror 100 is detected to have been moved or reoriented.

In addition to identifying pixel regions 150 and 152, at optional step 802, vision processor 130 may also determine one or more side window pixel regions 154 and 156 corresponding to side windows of vehicle 102. Side window pixel regions 154 and 156 (see Figure 5) may be defined by vision processor 130 by similar object, contour or edge detection routines used to define interior vehicle cabin pixel region 150 and rear window pixel region 152.

At step 803, vision processor 130 calculates a respective pixel brightness measure in the visible wavelength range of both the interior vehicle cabin pixel region 150 and rear window pixel region 152 for an image or plurality of images. The pixel brightness measure for the interior vehicle cabin pixel region 150 is referred to as the "ambient brightness measure" (as is approximates ambient conditions within the vehicle) while the pixel brightness value for the rear window pixel region 152 is referred to as the "rear brightness measure".

In some embodiments, the pixel brightness measure calculating step 803 includes determining peaks of high brightness in the overall brightness histogram for the visible wavelength pixels within pixel regions 150 and 152. By way of example, for an RGB-IR image sensor, only the pixels corresponding to the red, green and blue sensitive pixels are taken into account for the purpose of this brightness measure as they contribute to glare. In other embodiments, this step includes determining one or more percentile values, or a standard deviation of pixel brightness distribution of pixels within one of regions 150 and 152. In further embodiments, this step includes determining a mean, peak or other combination or aggregation of pixel brightness across all of the visible wavelength pixels within one of regions 150 and 152

In some embodiments, the pixel brightness measure includes averaging the pixel brightness in the visible wavelength range for the respective regions 150 and 152 across a plurality of temporally spaced images. This may distinguish short bursts of brightness such as from a bright streetlight the vehicle is passing (which may not justify dimming mirror 100) from a more stable brightness such as another vehicle behind vehicle 102. In further embodiments, the pixel brightness measure includes determining a maximum brightness of the pixel regions 150 and 152 in the visible wavelength range, standard deviation or two-sigma brightness values of these regions.

In some embodiments, further image processing of the rear window pixel region 152 is performed to determine a distribution of brightness across the pixel region. Using this approach, vision processor 130 may be able to distinguish a focused bright light source such as headlines from bright ambient conditions.

At the output of step 803, each pixel region 150 and 152 is designated with a pixel brightness value, such as between 0 and 255 for an 8-bit image. In general, pixel brightness values may take the value in the range of between 0 and (2ⁿ), where *n* is the pixel bit depth corresponding to the range of values a pixel can detect. As mentioned above, this brightness measure is only based on pixels sensitive to the visible wavelength range.

At optional step 804, where side window pixel regions 154 and 156 are defined in optional step 802, vision processor 130 defines a pixel brightness measure in the visible wavelength range for these two regions in a similar manner to that of defining pixel brightness measures for regions 150 and 152. The pixel brightness measure for the side window pixel regions 154 and 156 are referred to as an "external brightness measure". This external brightness measure may include a, mean, peak, one or more percentile values of pixel brightness distribution, standard deviation of pixel brightness distribution, highest or lowest brightness of the two pixel regions 154 and 156 or may involve a comparison of the separate brightness measures of the two pixel regions.

At step 805, a comparison of the ambient brightness measure and rear brightness measure is made. By way of example, this comparison may include a simple difference determination between the two values to determine which brightness is greater/lower. In other embodiments, this comparison may include comparing the ambient brightness measure and rear brightness measure to one or more reference values or ranges.

At step 806, a dimming control signal for mirror 100 is derived based on the comparison of pixel brightness measures in step 805. Various control options are possible and these are summarized below.

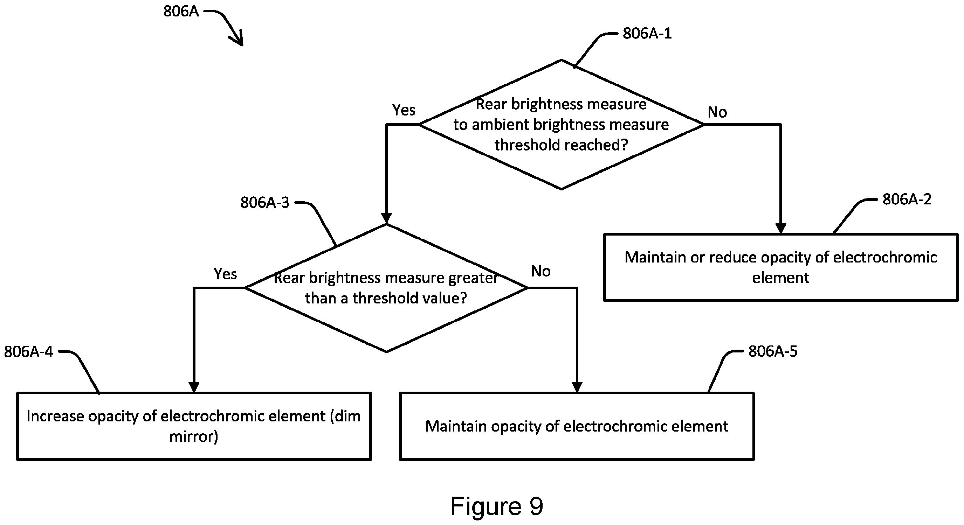

Referring to Figure 9, one exemplary sub-method 806A of deriving a dimming control signal is illustrated. Sub-method 806A simply uses a comparison of the ambient brightness measure and the rear brightness measure. At sub-step 806A-1, vision processor 130 determines whether the comparison of the rear brightness measure to the ambient brightness measure is greater than or equal to a threshold. This may include a direct comparison of whether the rear brightness measure is greater than the ambient brightness measure or may include determining a ratio of the rear brightness measure to ambient brightness measure. If the threshold is not reached (such as when the ambient brightness measure is greater than the rear brightness measure), at sub-step 806A-2, a dimming control signal is derived which maintains or reduces the opacity of electrochromic element 140. This acts to maintain or allow more light from the rear window 112 to be reflected from mirror 100. The level of dimming control may be based on the magnitude of the difference in brightness with a greater reduction in opacity occurring where the ambient brightness measure is significantly greater than the rear brightness measure or the ratio of the two measures is within a specific range of ratios. One or more voltage levels may be preset which correspond to brightness difference thresholds or ranges. When the interior and rear brightness measures are the same or similar to within a predefined range (or ratio range), a control signal that provides no change to the opacity of the electrochromic element 140 may be applied.

If, at sub-step 806A-1, the threshold is reached (such as when the rear brightness measure is greater than the ambient brightness measure), at sub-step 806A-3, vision processor 130 then determines if the rear brightness measure is greater than a threshold value to justify dimming. If the rear brightness measure is greater than the threshold, at sub-step 806A-4, a dimming control signal is derived which increases the opacity of electrochromic element 140. This corresponds to high glare conditions, such as night time when lights from another vehicle are shining through rear window 112. This control acts to reduce the amount of light from rear window 112 to be reflected from mirror100 (dimming). The control of electrochromic element 140 may be based on a predefined set of voltage levels corresponding to different levels of opacity (dimming levels), which are based on the level of rear pixel brightness or brightness difference.

If the rear brightness measure is less than the threshold, at sub-step 806A-5, a dimming control signal is derived which maintains the opacity of electrochromic element 140.

A determination of whether it is currently day or night time can be factored into the dimming control of electrically controllable reflective device 108. Inadvertent dimming of device 108 in the daytime due simply to increased ambient light in the rear window pixel region 152 may impact a driver's vision through mirror 100. The dimming control logic of processor 124 may include day and night modes wherein greater dimming control is performed during the nighttime due to the greater impact of glare in the rear window pixel region 152. This may be achieved by having separate voltage look-up tables for day and night. In addition, where camera 110 includes capability to image in both the visible and infrared wavelength ranges, day/night determination can be used to switch camera 110 between a visible imaging mode for use during the daytime and an infrared imaging mode for use during the nighttime.

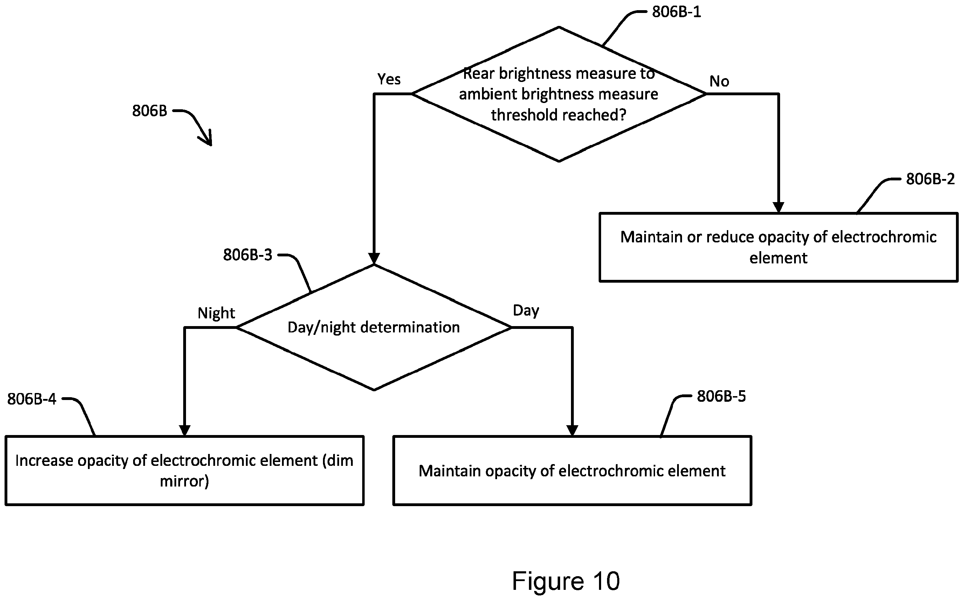

Referring now to Figure 10, another exemplary sub-method 806B of deriving a dimming control signal is illustrated that includes day/night determination. This sub-method leverages the side pixel regions 154 and 156 and the corresponding exterior brightness measure and/or an ambient light sensor.

At sub-step 806B-1 , vision processor 130 determines whether the comparison of the rear brightness measure to the ambient brightness measure is greater than or equal to a threshold. This may include a direct comparison of whether the rear brightness measure is greater than the ambient brightness measure or may include determining a ratio of the rear brightness measure to ambient brightness measure. If the threshold is not reached (such as when the ambient brightness measure is greater than the rear brightness measure), at sub-step 806B-2, a dimming control signal is derived which maintains or reduces the opacity of electrochromic element 140 in a similar manner to that described in sub-step 806A-2 above.

If, at sub-step 806B-1, the threshold is reached, (such as when the rear brightness measure is greater than the ambient brightness measure) at sub-step 806B-3, a day/night determination is made. This may be based on the exterior brightness measure from side pixel regions 154 and 156 and/or a measure of ambient light from an ambient light sensor. If the exterior brightness measure or ambient brightness measure exceeds a predetermined threshold, processor 124 determines that it is currently daytime. If the determination is made that it is nighttime, at sub-step 806B-4, a dimming control signal is derived which increases the opacity of electrochromic element 140. If the determination is made that it is daytime, at sub-step 806B-5, a dimming control signal is derived which maintains the opacity of electrochromic element 140.

Method 800 may be performed iteratively with sequential dimming to different voltage levels until a suitable level of brightness difference is determined.

Mirror 100 may be adapted to perform higher level processing such as a day/night determination. In some embodiments, this day/night determination may be based simply on a detection of interior ambient light from the ambient brightness measure. By way of example, if the average brightness of the ambient brightness measure exceeds a predetermined threshold, processor 124 may determine that it is daytime. Where side window pixel regions 154 and 156 are defined in optional step 802, the external brightness measure from these pixel regions may be used to directly determine whether it is day or night. By way of example, if the average brightness of the exterior pixel brightness exceeds a predetermined threshold, processor 124 may determine that it is daytime.

In some embodiments, vision processor 130 is adapted to perform a comparison of pixel brightness between pixels corresponding to the side window pixel regions 154 and 156 and rear window pixel region 152. That is, a comparison between the rear brightness measure and external brightness measure is performed. Given that bright headlights in the rear window pixel region 152 can create a large brightness, there is ambiguity in using this region as a proxy for day/night measure.

In some embodiments, mirror 100 also includes an ambient light sensor (not shown) mounted to a front of the body 104, which is configured to detect ambient light conditions in front of the vehicle. In other embodiments, this ambient light sensor may be located at other regions within vehicle 102. This ambient light sensor generates an ambient light signal that is sent to device controller 132, which is responsive to the ambient light signal in addition to the control signal for controlling a transmittance of the electrically controllable reflective device. This ambient light signal may be used by processor 124 to make a day/night determination. If the ambient light level detected by the ambient light sensor is above a threshold level, processor 124 determines that it is currently daytime.

In some embodiments, camera 110 includes auto exposure control which automatically adjusts the exposure period of the camera image sensor based on ambient light levels. In these embodiments, the auto exposure control can be used as a proxy to determine a level of ambient light . The dimming control signal may therefore be derived at least in part from one or more auto exposure control settings from camera 110. At night, camera 110 will operate at a high shutter period and gain level. In bright sunny conditions the shutter period and gain level will be low. Therefore, exposure configuration can be used by controller 132 to determine whether it is bright or dark outside, without the need to spend CPU cycles measuring pixel intensity across the cabin. An exposure period and/or an imaging mode of the camera may also be adjusted based on the determination of day or night by processor 124.

### Vehicle Monitoring System Overview

In addition to performing automatic dimming control, mirror 100 may be configured to function as a driver or occupant monitoring system. By integrating the components of a driver or occupant monitoring system of a vehicle with an auto-dimming mirror, the overall cost of the components can be reduced while enhancing the auto-dimming functionality. This can be achieved with camera 110 having sensitivity to radiation in both the visible and infrared wavelength ranges. By way of example, this may be by incorporating a RGB-IR image sensor into camera 110.

As illustrated in Figure 5, camera 100 is positioned to capture images of driver 114 and occupants 116-118 in at least the infrared wavelength range during operation of vehicle 102. In these embodiments, vision processor 130 is further adapted for performing various image processing algorithms on the captured images such as facial detection, facial feature detection, facial recognition, facial feature recognition, facial tracking or facial feature tracking, such as tracking a person's eyes. Example image processing routines are described in US Patent 7,043,056 to Edwards et al. entitled "*Facial Image Processing System*" and assigned to Seeing Machines Pty Ltd, the contents of which are incorporated herein by way of cross-reference.

Light sources 144A and 144B are adapted to illuminate driver 114 and/or occupants 116-118 with infrared radiation, during predefined image capture periods when camera 110 is capturing an image, so as to enhance the driver's face to obtain high quality images of the driver's face or facial features. Operation of camera 110 and light sources 144A and 144B in the infrared range reduces visual distraction to the driver.

Vision processor 130 is configured to process the captured images to perform the driver monitoring; for example to determine a three dimensional head pose and/or eye gaze position of the driver 114 within the monitoring environment. To achieve this, vision processor 130 utilizes one or more eye gaze determination algorithms. This may include, by way of example, the methodology described in US Patent 7,043,056 to Edwards et al. entitled "*Facial Image Processing System*" and assigned to Seeing Machines Pty Ltd. Vision processor 130 may also perform various other functions including determining attributes of the driver 114 such as eye closure, blink rate and tracking the driver's head motion to detect driver attention, sleepiness or other issues that may interfere with the driver safely operating the vehicle.

The raw image data, gaze position data and other data obtained by vision processor 130 is stored in memory 128.

Device controller 132 is configured to control camera 110 and to selectively actuate light sources 144A and 144B in a sequenced manner in sync with the exposure time of camera 110. The light sources may be controlled to activate alternately during even and odd image frames to perform a strobing sequence. Other illumination sequences may be performed by device controller 120, such as L,L,R,R,L,L,R,R... or L,R,0,L,R,0,L,R,0... where "L" represents a left mounted light source, "R" represents right mounted light source and "0" represents an image frame captured while both light sources are deactivated. light source 108 is preferably electrically connected to device controller 132 but may also be controlled wirelessly by controller 132 through wireless communication such as Bluetooth^{™} or WiFi^{™} communication.

Thus, during operation of vehicle 102, device controller 132 activates camera 110 to capture images of the face of driver 114 in a video sequence. Light sources 144A and 144B are activated and deactivated in synchronization with consecutive image frames captured by camera 110 to illuminate the driver during image capture. Working in conjunction, device controller 132 and vision processor 130 provide for capturing and processing images of the driver to obtain driver state information such as drowsiness, attention and gaze position during an ordinary operation of vehicle 102.

### INTERPRETATION

The term "infrared" is used throughout the specification. Within the scope of this specification, infrared refers to the general infrared area of the electromagnetic spectrum which includes near infrared, infrared and far infrared frequencies or light waves.

The term "visible" in the context of visible wavelengths is used throughout the specification to mean the range of wavelengths (or, equivalently, frequencies) which are visible to the average human eye.

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "controller" or "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

Reference throughout this specification to "one embodiment", "some embodiments" or "an embodiment" means that a particular feature, structure or characteristic described in connection with the embodiment is included in at least one embodiment of the present disclosure. Thus, appearances of the phrases "in one embodiment", "in some embodiments" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of exemplary embodiments of the disclosure, various features of the disclosure are sometimes grouped together in a single embodiment, Fig., or description thereof for the purpose of streamlining the disclosure and aiding in the understanding of one or more of the various inventive aspects. This method of disclosure, however, is not to be interpreted as reflecting an intention that the claims require more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this disclosure.

Furthermore, while some embodiments described herein include some but not other features included in other embodiments, combinations of features of different embodiments are meant to be within the scope of the disclosure, and form different embodiments, as would be understood by those skilled in the art. For example, in the following claims, any of the claimed embodiments can be used in any combination.

In the description provided herein, numerous specific details are set forth. However, it is understood that embodiments of the disclosure may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical, electrical or optical contact, or that two or more elements are not in direct contact with each other but yet still co-operate or interact with each other.

Embodiments described herein are intended to cover any adaptations or variations of the present invention. Although the present invention has been described and explained in terms of particular exemplary embodiments, one skilled in the art will realize that additional embodiments can be readily envisioned that are within the scope of the present invention.

## Claims

1. A rearview mirror for a vehicle, the rearview mirror comprising:
a body mounted to the vehicle and supporting an electrically controllable reflective device;
a camera mounted to or adjacent to the body, the camera comprising an image sensor having a pixel array adapted to capture two or three dimensional images of an interior of the vehicle, including a rear window, in both the visible and infrared wavelength range;
a processor configured to process the captured images to generate a control signal for controlling a transmittance of the electrically controllable reflective device;
wherein the control signal is derived based on a comparison of pixel brightness between pixels within an interior vehicle cabin pixel region and a rear window pixel region in the captured images.

2. The rearview mirror according to claim 1 wherein the comparison of pixel brightness includes comparing one or more percentile values, or standard deviation of pixel brightness distribution of pixels within the interior vehicle cabin pixel region to one or more percentile values, or standard deviation of pixel brightness distribution of pixels within the rear window pixel region.

3. The rearview mirror according to any one of the preceding claims wherein the vehicle cabin pixel region is defined based on object detection of one or more objects within the vehicle cabin.

4. The rearview mirror according to any one of the preceding claims wherein the rear window pixel region is defined as a cabin region located by object detection in the captured images.

5. The rearview mirror according to claim 1 or claim 2 wherein the electrically controllable reflective device includes an electrochromic device.

6. The rearview mirror according to any one of the preceding claims wherein the processor is housed within the body.

7. The rearview mirror according to any one of claims 1 to 5 wherein the processor is located external to the body.

8. The rearview mirror according to any one of the preceding claims including an ambient light sensor mounted to a front of the body, wherein the ambient light sensor is configured to detect ambient light conditions in front of the vehicle and generate an ambient light signal.

9. The rearview mirror according to claim 8 wherein the processor is responsive to the ambient light signal in addition to the control signal for controlling a transmittance of the electrically controllable reflective device.

10. The rearview mirror according to any one of the preceding claims wherein the camera is an occupant monitoring camera adapted to provide images to the processor to perform occupant or cabin monitoring within the interior of the vehicle.

11. The rearview mirror according to any one of the preceding claims wherein the processor is adapted to determine a pose of the camera from known objects within the captured images.

12. The rearview mirror according to any one of the preceding claims wherein the camera is configured such that the image sensor also images a side window of the vehicle.

13. The rearview mirror according to claim 12 wherein the processor is configured to determine a side window pixel region and to perform a comparison of pixel brightness between pixels corresponding to the side window pixel region and rear window pixel region.

14. The rearview mirror according to claim 13 wherein the processor is configured to determine whether it is currently day or night based on a pixel brightness of the side window pixel region.

15. The rearview mirror according to claim 14 wherein an exposure period and/or imaging mode of the camera is adjusted based on the determination of day or night by the processor.
